# EUROPÄISCHE PATENTSCHRIFT

(11) **EP 3 085 849 B1**
(45) Veröffentlichungstag und Bekanntmachung des Hinweises auf die Patenterteilung: **06.06.2018**
(21) Anmeldenummer: 15001171.6
(22) Anmeldetag: 21.04.2015
(51) Int. Cl.: E04F 11/18, F16B 2/18, F16B 7/04

(54) **MONTAGESYSTEM**
INSTALLATION SYSTEM
SYSTÈME DE MONTAGE

(43) Veröffentlichungstag der Anmeldung: 26.10.2016
(73) Patentinhaber: Blaas, Martin, 3646 Einigen (CH)
(72) Erfinder: Blaas, Martin, 3646 Einigen (CH)
(74) Vertreter: Keller & Partner Patentanwälte AG

(56) Entgegenhaltungen:
- DE-A1-102012 002 801
- DE-U1- 29 610 634
- US-A- 2 649 220
- US-A- 3 447 821
- US-A- 3 973 756

## Beschreibung

### Technisches Gebiet

Die Erfindung betrifft ein Montagesystem umfassend ein erstes Element und ein zweites Element und einen Befestigungskörper zum Befestigen des ersten Elements am zweiten Element. Weiter betrifft die Erfindung ein entsprechendes Montageverfahren.

### Stand der Technik

Geländersysteme sind aus dem Stand der Technik bekannt. Geländer bestehen im Wesentlichen aus Stützelementen wie zum Beispiel Pfosten und einem auf den Stützelementen befestigten Handlauf.

Geländer werden zum Beispiel bei Gebäuden für Balkone, Treppen, Fensterbrüstungen oder auch bei Wegen, Brücken, Böschungen, sowie auf Fahrzeugen wie Schiffen, in Industrieanlagen, Gerüsten etc. eingesetzt.

Neben den kunsthandwerklichen Geländer, welche sehr aufwändig und teuer in der Herstellung sind, werden heute vermehrt Geländer eingesetzt, welche schnell aufgebaut und einfach angepasst werden können und dabei dennoch robust sind und ein elegantes Erscheinungsbild haben.

Solche moderne Geländer werden heute zum Teil an einem Stück vorgefertigt und vor Ort direkt verschraubt oder eingemörtelt.

Einstückige Geländer haben jedoch den Nachteil, dass einerseits ein allfälliges Anpassen bei fehlerhafter Messung oder Bauabweichungen vor Ort äusserst schwierig ist. Zudem ist ein Transport fertiger Geländer typischerweise aufwendig, da diese ein grosses Transportvolumen beanspruchen.

Andere bekannte Geländersysteme sind modular aufgebaut und können vor Ort aus Einzelteilen, wie zum Beispiel Handlauf, Pfosten, Geländerfelder etc. zusammengebaut werden. Der Handlauf wird dabei zum Bespiel mittels Schrauben oder ähnlichen Befestigungsmitteln mit den Pfosten verbunden und die Pfosten werden verschraubt oder eingemörtelt.

Die DE 10 2012 002801 A1 betrifft einen Pfosten und Geländer und umfasst drei Pfosten, drei Bodenanker, einen Handlauf und eine Verkleidung. Der Handlauf umfasst im Bereich jedes Pfostens ein Kupplungselement, eine Spannschraube, eine Spannmutter und eine Sicherungsschraube. Der Handlauf umfasst ein Handlaufprofil, welches an einer Unterseite eine hinterschnittene Nut parallel zu einer Längsachse des Handlaufs aufweist. Zur Befestigung des Handlaufprofils an dem Pfosten umfasst der Handlauf das Kupplungselemente, die Spannschraube, die Spannschraubenmutter und die Sicherungsschraube. Die Spannschraube ist durch eine das als Hohlprofil ausgeführte Kupplungselement durchlaufende Durchgangsbohrung geführt. Mit Hilfe der Spannschraubenmutter sind das Kupplungselement und das Handlaufprofil über die Spannschraube miteinander verspannt, so dass das Kupplungselement in einer gewünschten Position an dem Handlaufprofil befestigt ist.

Die US 2 649 220 A betrifft einen lösbaren Verschluss für eine Flasche. Der Hauptkörper des Verschlusses hat die Form eines invertierten Bechers. Der Verschluss wird auf einen Flaschenhals seitwärts aufgeschoben. Der Hauptkörper weist gegenüberliegende Öffnungen auf, über welche eine Nockenwelle gelagert ist. Die Nockenwelle läuft ausserhalb der Öffnung in einem Betätigungsarm aus.

Nachteilig bei den modularen Geländersystemen ist, dass die Herstellung der Geländerteile aufwendig ist, insbesondere müssen typischerweise relativ viele Löcher gebohrt und Gewinde gedreht werden. Weiter ist die Montage vor Ort mit einem grossen Aufwand verbunden. Zudem erfordert die Montage grosse Erfahrung des Installateurs, womit die Montage aufwändig und teuer ist.

### Darstellung der Erfindung

Aufgabe der Erfindung ist es, eine dem eingangs genannten technischen Gebiet zugehörendes Montagesystem zu schaffen, welches besonders einfach aufgebaut und ebenso einfach in der Montage ist. Eine weitere Aufgabe der Erfindung liegt darin, ein kostengünstiges Herstellungsverfahren für ein solches Montagesystem zu schaffen.

Die Lösung der Aufgabe ist durch die Merkmale des Anspruchs 1 definiert.

Das erfindungsgemässe Montagesystem zeichnet sich insbesondere dadurch aus, dass es besonders kostengünstig hergestellt werden kann. Das erste und das zweite Element werden in einfacher Weise durch ein am ersten Element rotierbar gelagerten Befestigungskörper gehalten.

Die Herstellung der einzelnen Teile kann weitgehend aus einfachsten Rohmaterialien, wie zum Beispiel Stahlrohren für die ersten und zweiten Elemente, insbesondere Vierkantrohre, sowie zum Beispiel Rundstangen aus Vollmaterial-Stahl für die Befestigungskörper erfolgen.

Der Begriff Geländerpfosten bezeichnet im Allgemeinen ein Halteelement für einen Handlauf, welches den Handlauf mit dem Boden, der Balkonplatte, der Brüstung, dem Deck, der Brücke etc. verbindet. Der Pfosten kann dabei in bekannter Weise verankert sein, zum Beispiel kann der Pfosten auf den Boden aufgeschraubt, in den Boden eingegraben, eingemörtelt oder sonst wie befestigt werden.

Als Handlauf wird vorliegend bei geraden Geländern eine horizontal oberste Strebe und bei Treppengeländern respektive sonstigen Geländern mit Neigung eine oberste, parallel dem Treppenverlauf oder dem sonstigen Neigungsverlauf (Rampe, Weg mit Neigung oder dergleichen) folgende Strebe angesehen. Dem Fachmann ist klar, dass der Handlauf im Prinzip kein tragendes oder stabilisierendes Bauteil des Geländers sein muss. So kann auf der obersten Strebe prinzipiell ein Handlauf vorgesehen sein, welcher konstruktiv keinen Einfluss auf das Geländer als solches hat. Bei solchen Konstruktionen wird als Handlauf die Gesamtheit zwischen Handlauf und die den Handlauf tragende Querstrebe angesehen.

Der Befestigungskörper dient zum Festklemmen respektive zum kraftschlüssigen Fixieren des zweiten Elements am ersten Element. In einer bevorzugten Ausführungsform dient der Befestigungskörper zum Festklemmen eines Handlaufs an einem Geländerpfosten. Der Befestigungskörper ist dazu rotierbar am ersten Element gelagert. Das erste Element respektive der Geländerpfosten umfasst ein Auflager, auf welchem das zweite Element respektive der Handlauf oder eine sonstige Querstrebe aufliegen kann. Der Befestigungskörper ist nun vorzugsweise zum Auflager beabstandet am ersten Element gelagert. Zwischen dem Befestigungskörper und dem Auflager ist eine Lücke, welche je nach Orientierung des Befestigungskörpers bezüglich einer Rotation um die Längsachse desselben unterschiedlich ist. Wenn der Befestigungskörper mit der ersten radialen Richtung in Richtung des Auflagers orientiert ist, Ist die Lücke zwischen dem Befestigungskörper und dem Auflager geringfügig grösser als eine Dicke des zweiten Elements, so dass das zweite Element zwischen dem Auflager und dem Befestigungskörper angeordnet sein kann. Wenn der Befestigungskörper mit der zweiten radialen Richtung in Richtung des Auflagers orientiert ist, ist die Lücke zwischen dem Befestigungskörper und dem Auflager geringfügig kleiner als eine Dicke des zweiten Elements, so dass das zweite Element zwischen dem Auflager und dem Befestigungskörper festgeklemmt ist.

Der Begriff Radius ist folgendermassen zu verstehen:
- der Befestigungskörper umfasst eine Längsachse;
- der Befestigungskörper ist um diese Längsachse rotierbar am ersten Element gelagert, respektive ist am ersten Element lagerbar.
- Radius bezeichnet diejenige Strecke, welche von der Längsachse aus rechtwinklig zur Aussenfläche oder Aussenkante des Befestigungskörpers ragt.
- der Befestigungskörper weist mindestens zwei unterschiedliche Radien auf,

Zur Montage eines ersten Elements an einem zweiten Element, insbesondere zur Montage eines Handlaufs oder einer Querstrebe an einem Geländerpfosten, wird ein Verfahren nach Anspruch 17 verwendet. Die Montage kann damit weitgehend ohne Werkzeuge erfolgen, womit insbesondere eine schnelle und kostengünstige Montage ermöglicht wird.

Vorzugsweise umfasst der Befestigungskörper einen zylindrischen, insbesondere einen kreiszylindrischen Grundkörper, Zylindrische und insbesondere kreiszylindrische Grundkörper können aus besonders kostengünstigen Materialien, wie Rohren wie Rundrohren, Vier- oder Mehrkantrohren oder Stangen aus Vollmaterial wie Rundstäbe oder Stäbe mit quadratischem, rechteckigem oder sonstigem polygonalem Querschnitt hergestellt werden. Solche Baustoffe sind typischerweise als Meterware kostengünstig verfügbar. Damit können die Gesamtkosten des Geländersystems gering gehalten werden.

Der Grundkörper kann in Varianten auch einen anderweitig geformten Grundkörper aufweisen. Zum Beispiel kann ein Querschnitt eines zylindrischen Grundkörpers derart ausgebildet sein, dass eine Radienänderung pro Winkel vorgesehen ist, welche hin zum maximalen Radius abnimmt, um während der Rotation des Befestigungskörpers den Kraftaufwand zu steuern. Damit kann das Montageverfahren komfortabler gehalten werden.

Dem Fachmann ist klar, dass der Befestigungskörper auch beliebig andere Formen aufweisen kann. Zum Beispiel kann der Befestigungskörper aus einem Rundstab ausgebildet sein, welche mittig eine U-Form aufweist, wobei der Radius des Rundstabs den ersten Radius darstellt und die U-Form den zweiten Radius bildet.

Vorzugsweise läuft der Befestigungskörper beidseitig in Richtung der Längsachse in einen Lagerbolzen aus, über welchen der Befestigungskörper um die Längsachse rotierbar am ersten Element gelagert ist. Damit wird eine besonders einfache Lagerung des Befestigungskörpers am ersten Element erreicht, Die Lagerbolzen sind vorzugsweise einstückig mit dem Grundkörper ausgebildet, womit einerseits nur ein Bauteil hergestellt werden muss und anderseits die Stabilität des Befestigungskörpers hoch gehalten werden kann. Weiter wird damit auch die Montage vereinfacht, da weniger Bauteile zusammengebaut werden müssen.

In Varianten kann der Grundkörper auch jeweils stirnseitig eine Bohrung zur Aufnahme eines Bolzens oder einer Schraube aufweisen, über welche der Befestigungskörper am ersten Element gelagert werden kann. Weiter kann der Grundkörper auch als Rohrabschnitt ausgebildet sein, wobei der Bolzen als Rundstababschnitt mit einer entsprechend grösseren Länge als der Grundkörper ausgebildet ist, und wobei der Innendurchmesser des Grundkörpers dem Aussendurchmesser des Bolzens entspricht. Die Fixierung des Bolzens im Rohr kann beispielsweise dadurch erreicht werden, dass der Grundkörper heiss über den Bolzen geführt wird und beim Abkühlen den Bolzen festklemmt. Schliesslich kann auf den Bolzen auch verzichtet werden, wenn der Grundkörper selbst am ersten Element rotierbar gelagert wird.

Bevorzugt sind die Lagerbolzen exzentrisch am Grundkörpers angeordnet. Besonders bevorzugt ist der Grundkörper zur Längsachse des Befestigungskörpers parallel und versetzt angeordnet. Damit wird erreicht, dass ein besonders kostengünstiger Grundkörper, insbesondere eine Stange mit rundem Querschnitt eingesetzt werden kann. Dadurch dass die Lagerbolzen exzentrisch am Grundkörper angeordnet sind, können bei einer Rotation um die Längsachse des Befestigungskörpers (diese Längsachse stimmt gemäss obiger Definition mit der Längsachse des Befestigungskörpers überein) wie gewünscht die verschiedenen Radien erreicht werden. Die Lagerbolzen können zum Beispiel an den Enden eines Rundstabs gepresst oder über ein spanabhebendes Verfahren erreicht werden. Dem Fachmann sind dazu weitere Herstellungsverfahren bekannt.

In Varianten kann der Grundkörper auch zum Beispiel einen ovalen Querschnitt aufweisen, so dass die Lagerbolzen in der Längsachse des Grundkörpers angeordnet sein können.

In einer weiteren bevorzugten Variante ist der zweite Radius einstellbar. Dazu kann der Grundkörper auch einen runden Querschnitt aufweisen und die Lagerbolzen können dennoch in der Längsachse des Grundkörpers angeordnet sein - in diesem Fall kann die Ausbildung des zweiten Radius über eine weiteres Element, zum Beispiel über eine radial im Grundkörper eingedrehte Schraube erreicht werden, über welche der zweite Radius einstellbar ist. Dem Fachmann ist klar, dass neben dem Einsatz von Schrauben auch andere Möglichkeiten bestehen, an einem Rundstab einen zweiten Radius anzubringen. So kann zum Beispiel auch ein Blech aufgeschweisst werden etc.

Vorzugsweise umfasst der Befestigungskörper Kopplungsmittel für ein Werkzeug, um den Befestigungskörper um die Längsachse zu rotieren. Damit kann ein Kraftschluss zwischen dem Befestigungskörper und dem zweiten Element verbessert werden.

In Varianten kann auf die Kopplungsmittel auch verzichtet werden.

Bevorzugt sind die Kopplungsmittel als mindestens eine rechtwinklig zur Grundkörperlängsachse orientierte Bohrung ausgebildet. Eine Bohrung ist besonders einfach und kostengünstig erreichbar. Damit kann auch das Werkzeug besonders einfach und kostengünstig ausgebildet werden, da lediglich ein Stift zum Eingreifen in die Bohrung notwendig ist. Das Werkzeug kann damit unter Umständen zusammen mit dem Geländersystem ausgeliefert werden, ohne die Gesamtkosten wesentlich zu beeinflussen oder das Werkzeug zurück verlangen zu müssen (was wiederum einen administrativen Aufwand bedeuten würde). Vorzugsweise verläuft die Bohrung in Richtung des ersten Radius, so dass die Bohrung in der Schliessstellung, d.h. bei maximalem Kraftschluss, parallel zum Auflager steht und damit das Werkzeug entlang des Handlaufs aus der Bohrung gezogen werden kann. Im Prinzip kann die Bohrung in der Schliessstellung auch einen kleinen Winkel zum Auflager, von zum Beispiel 20° oder 30° aufweisen, so dass das Werkzeug schräg nach unten aus der Bohrung gezogen werden kann. Damit kann je nach Geländersystem die Ergonomie bei der Montage verbessert werden.

In Varianten können auch andere Kopplungsmittel vorgesehen sein. Zum Beispiel könnten die Lagerbolzen, sofern von aussen erreichbar, mit einem Innensechskant sonstigem Formschluss und entsprechendem Werkzeugs drehbar sein. Weiter könnten die Lagerbolzen seitlich über die Lager hinausragen und mit einer Aussenkontur für einen Schlüssel, z.B. Sechskant oder dergleichen versehen sein. Auch der Grundkörper könnte, zum Beispiel in einem Bereich oder sogar über die gesamte Länge die Form eines Aussensechskants oder dergleichen aufweisen. Dem Fachmann sind auch weitere Kopplungsmittel bekannt, mittels welchen der Befestigungskörper rotiert werden kann.

Vorzugsweise weist das erste Element zwei zueinander beabstandete und fluchtende Bolzenlager auf, in welchen die Lagerbolzen des Befestigungskörpers gelagert sind.

Damit der Befestigungskörper am ersten Element gelagert werden kann, kann in einer ersten Variante der Grundkörper etwas kürzer ausgebildet sein, als der Abstand zwischen den beiden Bolzenlagern. Zum Beispiel kann einseitig der eine Lagerbolzen etwas länger ausgebildet sein und im distalen Endbereich einen geringfügig kleineren Durchmesser als das Bolzenlager aufweisen. Bei der Montage kann damit der eine Lagerbolzen zuerst schräg in die Öffnung des Bolzenlagers eingeführt werden. Anschliessend wird der Befestigungskörper in die Flucht der beiden Bolzenlager verschwenkt und der zweite Lagerbolzen wird in die zweite Öffnung des Bolzenlagers eingefahren.

In einer zweiten Ausführungsform sind die Bolzenlager zumindest geringfügig elastisch, so dass diese auseinandergepresst und der Befestigungskörper eingerastet werden kann. Um den Rastvorgang zu begünstigen kann einer oder beide Lagerbolzen stirnseitig eine Abschrägung aufweisen.

In einer dritten Ausführungsform ist mindestens ein Lagerbolzen federnd mit dem Grundkörper verbunden, so dass die Bolzenlager starr ausgebildet sein können. Dem Fachmann sind weitere Ausführungsformen bekannt, welche das Einführen des Befestigungskörpers in die Bolzenlager ermöglichen.

Vorzugsweise weist das erste Element zwei parallele Zungen auf, in welchen jeweils ein Bolzenlager als Bohrungen ausgebildet sind, in welche die Lagerbolzen des Befestigungskörpers gelagert sind. Besonders bevorzugt ist das Bolzenlager als Bohrung im Geländerpfosten ausgebildet. Damit wird wiederum eine besonders einfach Konstruktion des Geländersystems erreicht.

In Varianten kann das Bolzenlager auch am Handlauf ausgebildet sein. Die Bolzenlager können auch an zwei gegenüberliegenden Seiten eines Vierkantrohrs ausgebildet sein, wobei eine der beiden weiteren Seiten für den Zugang zum Befestigungskörper offen ist.

Vorzugsweise sind die Zungen als Ausläufer zweier ersten parallelen Seiten eines ersten Rohrs, vorzugsweise eines ersten Vierkantrohrs ausgebildet. Diese Ausbildung kann besonders kostengünstig mittels eines Laserschneidvorgangs an einem Vierkantrohr erreicht werden. Damit kann das Bolzenlager mit besonders wenigen Arbeitsschritten und geringem Materialverbrauch erreicht werden.

In Varlanten können die Zungen auch als separate Elemente vorgesehen sein und mit dem ersten Element verbunden werden.

Bevorzugt ist ein Zwischenbereich zwischen den Zungen als Auflager für das zweite Element ausgebildet. Das Auflager ist vorzugsweise durch die Stirnseiten zweier gegenüberliegenden Seiten eines Vierkantrohrs ausgebildet. Um die Auflagefläche zu vergrössern könnte prinzipiell das Auflager und die beiden Zungen gebildet werden, Indem das Vierkantrohr entlang der Längskannten stirnseitig eingeschnitten wird und zwei gegenüberliegende Zungen nach innen oder aussen gebogen werden. Alternativ zum Biegen der Zungen können diese auch weg geschnitten werden, so dass die Stirnseite das Auflager bildet.

In Varianten kann das Auflager auch separat ausgebildet sein. Zum Beispiel kann das Auflager als geringfügig federndes Auflager, zum Beispiel aus einem Kunststoff ausgebildet sein, so dass das Fixieren des zweiten Elements am ersten Element durch einen kleineren Kraftaufwand erreicht werden kann.

Vorzugsweise ist das zweite Element als Rohr, insbesondere als Vierkantrohr ausgebildet, wobei eine erste Seite des Rohrs Schlitze zur Aufnahme der Zungen des ersten Elements aufweist. Damit kann bereits vor der kraftschlüssigen Fixierung des zweiten Elements mittels des Befestigungskörpers eine formschlüssige Fixierung in einer Ebene erreicht werden.

In Varianten kann auf die Schlitze auch verzichtet werden.

Vorzugsweise sind die Schlitze in eine Rohrlängsrichtung ausgerichtet und im Randbereich der ersten Seiten angeordnet. Damit können die Zungen innerhalb des zweiten Elements, respektive eines Handlaufs, aufgenommen sein, so dass diese von aussen nicht ersichtlich sind und damit auch das Erscheinungsbild des Geländers als Ganzes nicht beeinträchtigen. Weiter wird damit die Zugänglichkeit zum Befestigungskörper erleichtert. Für den Zugang kann bezüglich der Rohrlängsrichtung des zweiten Elements vor respektive hinter den Schlitzen eine Öffnung vorgesehen sein, durch welche hindurch der Befestigungskörper eingeführt, positioniert und rotiert werden kann.

Vorzugsweise ist ein Bereich zwischen den Schlitzen jedoch überbrückt und bildet so einen Kontaktbereich für den Befestigungskörper.

Die Schlitze können auch anderweitig, zum Beispiel quer zu einer Rohrlängsrichtung ausgerichtet sein. In diesem Fall würde das erste Element entsprechend um einen Winkel von 90° um die Längsachse gedreht montiert werden. In dieser Variante kann unter Umständen die Zugänglichkeit zum Befestigungskörper erschwert sein, sofern sichtbare Öffnungen an den beiden Elementen vermieden werden sollen.

Vorzugsweise ist das zweite Element, insbesondere über einen Vorsprung am ersten Element und eine entsprechende Öffnung am zweiten Element, in einer Ebene formschlüssig gehalten. Besonders bevorzugt sind die beiden Vorsprünge im Zwischenbereich angeordnet. Diese können in einfacher Weise durch einen Laserschneidvorgang hergestellt werden. Damit können die beiden Elemente zusätzlich in der Ebene formschlüssig fixiert werden.

In Varianten kann auf diese zusätzliche Fixierung über die Vorsprünge auch verzichtet werden.

Bevorzugt umfasst das Montagesystem einen Handlauf und eine parallel zum Handlauf angeordnete Querstrebe, welche in montiertem Zustand zueinander gerichtete Längsschlitze zur Aufnahme einer Füllplatte, insbesondere einer Glasplatte, aufweisen. Die Längsschlitze dienen dabei vorzugsweise zugleich als Zugang zu den Befestigungskörpern.

In Varianten können die Füllplatten auch aus Kunststoff oder anderen Materialien ausgebildet sein. Statt der Füllplatten können auch weitere Streben, zum Beispiel diagonal angeordnete Streben, Kreuze oder auch komplexere Ornamente aus Metall, Glas oder Kunststoff vorgesehen sein. Es kann auch auf die Füllplatten verzichtet werden. Statt einer Querstrebe können auch mehrere Querstreben oder keine Querstrebe vorgesehen sein.

Bevorzugt ist die Füllplatte über ein Dichtungselement in den Längsschlitzen des Handlaufs und der Querstrebe, vorzugsweise kraftschlüssig, gehalten. Für die Montage werden die Füllplatten vorzugsweise zuerst oben in den Schlitz des Handlaufs eingefahren und anschliessend in den unteren Schlitz der Querstrebe eingesetzt. Durch die Dichtungselemente wird die Füllplatte vorzugsweise kraftschlüssig gehalten. Sofern es sich bei der Füllplatte um eine massive Platte, wie zum Beispiel Sicherheitsglas handelt, dann ergibt sich eine besonders stabile Fixierung der Platte einerseits durch die Haftreibung an den Dichtungselementen und anderseits durch das Eigengewicht.

In Varianten, insbesondere je nach Ausbildung der Füllplatten, kann auf die Dichtungselemente auch verzichtet werden.

Vorzugsweise sind das erste Element, das zweite Element und der Befestigungskörper aus Stahl, insbesondere aus Chromstahl ausgebildet.

In Varianten können auch andere Materialien vorgesehen sein. Zum Beispiel kann das Montagesystem auch aus Aluminium oder Kunststoff ausgebildet sein. Die Materialwahl hängt dabei nicht zuletzt von der Wahl der Füllplatten, den Anforderungen an die Stabilität des Geländers sowie von den ästhetischen Anforderungen ab.

Vorzugsweise umfasst das Montagesystem weiter eine Verbindungsmanschette, womit zwei zweite Elemente in Längsrichtung verbunden werden können. Damit wird insbesondere bei der Verwendung des Systems zum Geländerbau, wobei das zweite Element als Handlauf ausgebildet ist, erreicht, dass die gesamte Geländerlänge frei wählbar ist. Je nach Geländerlänge kann auf die Manschette aber auch verzichtet werden. Prinzipiell können mehrere Handläufe auch zusammengeschweisst oder anderweitig verbunden werden.

Die Manschette weist vorzugsweise eine Aussenkontur auf, welche in einen rohrförmigen Handlauf passgenau eingeschoben werden kann. Damit ist die Manschette nach der Montage nicht sichtbar, so dass ein besonders ästhetisches Geländer erreicht werden kann. In Varianten kann die Manschette aber derart ausgebildet sein, dass diese den Handlauf umschliesst.

Bevorzugt weist die Manschette im Wesentlichen die Form eines Vierkantrohrs auf, wobei ein Querschnitt quer zu einer Längsrichtung derart bemessen ist, dass das Vierkantrohr in den Handlauf geschoben werden kann. Typischerweise ist die Manschette jeweils an einem Ende des Handlaufs bereits vormontiert, zum Beispiel verklebt oder verschweisst, und ragt zur anderen Hälfte über das Handlaufende hinaus. Letzteres kann dann in ein freies Handlaufende eines weiteren Handlaufs eingeschoben werden. Anderseits kann auf die Vormontage auch verzichtet werden, da die Manschette oder der Verlängerungsadapter durch die Zungen und Vorsprünge mit dem Handlauf zusammengehalten wird.

Vorzugsweise ist die Manschette derart ausgebildet, dass sie jeweils bei einem Geländerpfosten zum Einsatz kommt. Damit weist die Manschette ebenfalls Schlitze für die Zungen der Geländerpfosten auf. Zwischen den Schlitzen weist die Manschette einen offenen Bereich auf, so dass der Befestigungskörper mit dem zweiten Element, das heisst nicht mit der Manschette zusammenwirkt. Der offene Bereich zusammen mit den Schlitzen stellt damit eine Doppel-T-Form auf (ähnlich einem Querschnitt eines Doppel-T-Trägers).

Zusätzlich weist die Manschette einen Längsschlitz auf, so dass einerseits der Befestigungskörper von unten eingeführt werden kann und anderseits die Füllplatte eingeführt werden kann.

In Varianten kann die Manschette auch derart ausgeführt sein, dass sie zwischen zwei Pfosten zum Einsatz kommt. In diesem Fall könnte sie auch als ein Vierkantrohr mit einem Längsschlitz ausgebildet sein.

Eine Querstrebe ist vorzugsweise ebenfalls als Vierkantrohr mit einem Längsschlitz zur Aufnahme einer Füllplatte ausgebildet. In Varianten kann die Querstrebe auch ohne Längsschlitz ausgebildet sein, falls die Füllplatte anderweitig befestigt oder gänzlich darauf verzichtet wird.

Die Querstrebe weist bevorzugt an ihren Längsenden Zungen auf, welche in entsprechenden Schlitzen des ersten Elements respektive eines Geländerpfostens aufgenommen werden.

Dem Fachmann sind zur Montage einer Querstrebe auch andere Varianten bekannt. Zum Beispiel könnten diese auch über einen Flansch der Querstrebe mit dem ersten Element verschraubt oder anderweitig verbunden werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine schematische Darstellung einer Seitenansicht eines Geländerpfostens in Richtung des Geländerverlaufs;
- Fig. 1b: eine schematische Darstellung einer Seitenansicht eines Geländerpfostens quer zum Geländerverlauf;
- Fig. 1c: eine schematische Darstellung einer Draufsicht eines Geländerpfostens;
- Fig. 2a: eine schematische Darstellung einer Unteransicht eines Handlaufs;
- Fig. 2b: eine Schnittdarstellung entlang der Linie A-A der Figur 2a;
- Fig. 2c: eine Schnittdarstellung entlang der Linie B-B der Figur 2a;
- Fig. 3a: eine schematische Darstellung eines Montagebolzens in Richtung der Bohrung;
- Fig. 3b: eine Darstellung gemäss Figur 3a rechtwinklig zur Bohrung und quer zur Montagebolzenlängsrichtung;
- Fig. 3c: eine Darstellung gemäss Figur 3b in Bolzenlängsrichtung;
- Fig. 4a: eine schematische Darstellung der Anordnung des Geländerpfostens, Handlaufs und Montagebolzens in Richtung des Geländerverlaufs vor der Rotation des Montagebolzens;
- Fig. 4b: eine Darstellung gemäss Figur 4a nach der Rotation des Montagebolzens;
- Fig. 5a: eine schematische Unteransicht eines Verlängerungsadapters für den Handlauf;
- Fig. 5b: eine Schnittdarstellung entlang der Linie A-A der Figur 5a;
- Fig. 6a: eine schematische Darstellung der Anordnung des Geländerpfostens, Handlaufs, Montagebolzens und Verlängerungsadapters in Richtung des Geländerverlaufs vor der Rotation des Montagebolzens;
- Fig. 6b: eine Darstellung gemäss Figur 6a nach der Rotation des Montagebolzens;
- Fig. 7a: eine schematische Schnittdarstellung entlang des Geländerverlaufs der Anordnung gemäss Figur 4a vor dem Einsetzen des Montagebolzens mittels eines Werkzeugs;
- Fig. 7b: eine Darstellung gemäss Figur 7a nach dem Einsetzen des Montagebolzens;
- Fig. 7c: eine Darstellung gemäss Figur 7b nach der Rotation des Montagebolzens;
- Fig. 8a: eine schematische Darstellung einer Draufsicht auf eine Querstrebe;
- Fig. 8b: eine Darstellung gemäss Figur 8a in Richtung einer Längsrichtung der Querstrebe; und
- Fig. 9: eine schematische Darstellung eines kompletten Geländers.

Grundsätzlich sind in den Figuren gleiche Teile mit gleichen Bezugszeichen versehen.

### Wege zur Ausführung der Erfindung

Die nachfolgenden Figuren zeigen eine Ausführungsform der Erfindung. Mit zwei diagonalen Linien ist jeweils angedeutet, dass die entsprechenden Elemente wesentlich länger ausgebildet sind. Unter der Bezeichnung "Geländerverlauf" oder "Geländerlängsrichtung" ist jeweils eine Richtung des Geländers zu verstehen, welche als Tangente am Handlauf gegeben ist. Nicht sichtbare Merkmale sind zum Teil mit gestrichelten Linien angedeutet.

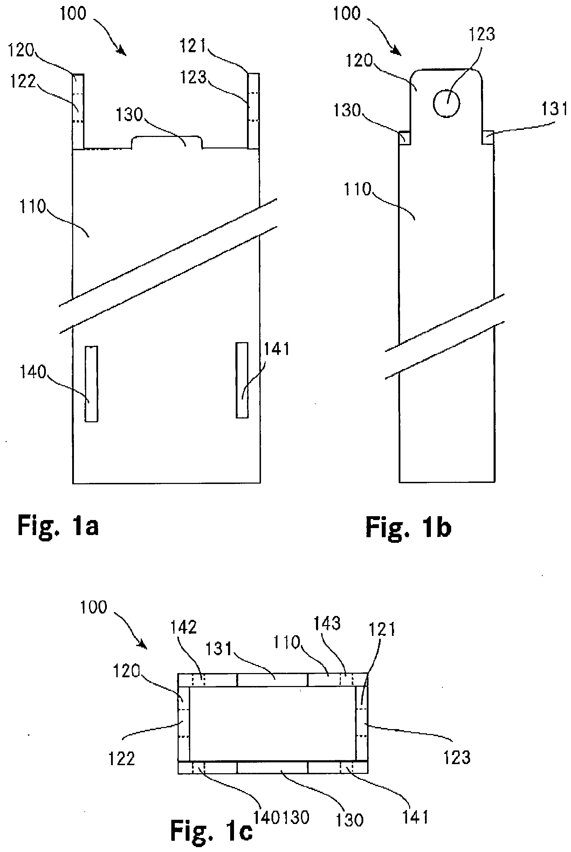

Die Figur 1a zeigt eine schematische Darstellung einer Seitenansicht eines Geländerpfostens 100 in Richtung des Geländerverlaufs. Der Geländerpfosten 100 weist vorliegend im Wesentlichen die Form eines Vierkantrohrs 110 auf, welches eine Länge von zum Beispiel 1m hat. Der Geländerpfosten 100 wird bei der Geländermontage am Boden, an einer Balkonplatte oder dergleichen in herkömmlicher und dem Fachmann bekannter Art und Weise befestigt. Die Figuren zeigen dazu keine Befestigungsmittel.

Der Geländerpfosten 100 mündet auf derjenigen Seite, welche einem Handlauf verbunden wird, in zwei Zungen 120, 121. Die Zungen 120, 121 sind als Ausläufer zweier gegenüberliegenden Seitenwänden des Vierkantrohrs 110 ausgebildet. Die Zungen 120, 121 weisen vorliegend eine Breite auf, welche der Vierkantrohrbreite minus zweimal die Wandstärke des Vierkantrohrs 110 entspricht und sind mittig zur Vierkantrohrseite angeordnet. Die beiden Zungen 120, 121 weisen jeweils eine, mit gestrichelten Linien angedeutete Bohrung 122, 123 auf, welche quer zu einer Geländerlängsrichtung ausgerichtet sind. Die Bohrungen 122, 123 dienen als Bolzenlager 122, 123 für einen Montagebolzen 300. An demselben Ende des Geländerpfostens 100 befinden sich an den Endbereichen der Seitenwänden des Vierkantrohrs 110, welche zwischen denjenigen Seiten sind, welche die Zungen 120, 121 aufweisen, jeweils ein Vorsprung 130, 131. Diese Vorsprünge 130, 131 sind mittig zu den Seiten angeordnet und weisen eine Breite auf, welche ungefähr 1/2 bis 1/3 der Breite der Seite ausmacht. Die Vorsprünge 130, 131 dienen zur Fixierung des Handlaufs 200 bezüglich des Geländerpfostens 100 in Längsrichtung. Am gegenüberliegenden Ende der Zungen 120, 121 weist der Geländerpfosten 100 Schlitze 140 - 143 zur Aufnahme von Zungen 620 - 623 einer Querstrebe 600 auf. Diese Schlitze 140 - 143 sind in Geländerlängsrichtung sowie in der Geländerebene ausgerichtet. Die Schlitze weisen bei montiertem Geländer zum Boden einen Abstand von zum Beispiel ca. 10 bis 15cm auf.

Die Figur 1b zeigt eine schematische Darstellung einer Seitenansicht eines Geländerpfostens 100 quer zum Geländerverlauf. In dieser Ansicht ist insbesondere die Zunge 120 mit dem zentral angeordneten Bolzenlager gut ersichtlich. Lateral zur Zunge 120 sind die Vorsprünge 130, 131 zu sehen. Der Geländerpfosten 100 weist vorliegend einen rechteckigen Querschnitt auf, wobei die Breitseite quer zur Geländerlängsrichtung ausgerichtet ist. Damit wir optisch bei hoher Stabilität ein filigraner Eindruck erreicht.

Die Figur 1c zeigt eine schematische Darstellung einer Draufsicht auf einen Geländerpfosten 100. Dabei ist ersichtlich, dass es sich beim Geländerpfosten 100 im Wesentlichen um ein Vierkantrohr handelt. Zudem sind in dieser Darstellung mit gestrichelten Linien sämtliche vier Querstrebenschlitze 140 - 143 ersichtlich.

Der Geländerpfosten 100 ist damit äusserst einfach aufgebaut und kann zum Beispiel mittels eines Laserverfahrens besonders effizient und kostengünstig hergestellt werden.

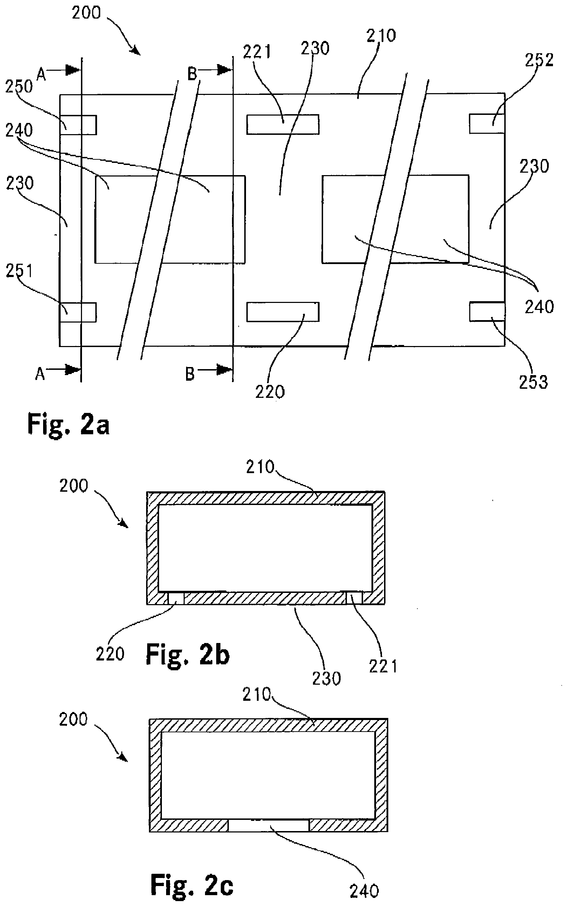

Die Figur 2a zeigt eine schematische Darstellung einer Unteransicht eines Handlaufs 200, Der Handlauf ist im Wesentlichen als Vierkantrohr 210 ausgebildet. Der Handlauf 200 weist in einem Geländerpfostenabstand jeweils zwei gegenüberliegende Zungenschlitze 220, 221 zur Aufnahme der Zungen 120, 121 des Geländerpfostens 100 auf. Die Zungenschlitze weisen einen doppelten Wandstärkeabstand zur Aussenkante des Handlaufs 200 auf, so dass bei eingefahrenen Zungen zwischen den Zungen und der Innenwand des Handlaufs noch eine Breite einer Wandstärke freiliegt, so dass ein Adapter 400 (siehe unten) noch Platz findet.

Der zwischen den Zungenschlitzen 220, 221 liegende Steg dient als Klemmbereich für den Montagebolzen 300. Die Zungenschlitze 220, 221 sind im Randbereich des Handlaufs 200 und in Geländerlängsrichtung ausgerichtet. Im Bereich zwischen jeweils zwei Zungenschlitzen 220, 221 weist der Handlauf 200 an der Unterseite eine Nut 240 auf. Die Nut 240 weist eine Breite auf, welche den Vorsprüngen 130, 131 entspricht. Die Vorsprünge 130, 131 greifen so in die beiden durch einen Steg 230 getrennte Nuten 240 ein, dass eine Fixierung des Handlaufs 200 in Längsrichtung erreicht wird. Da die Nut dieselbe Breite wie die Vorsprünge 130, 131 aufweist wird zusätzlich eine Fixierung quer zur Geländerlängsrichtung erreicht. Das Ende einer Nut 240 markiert dabei exakt den Beginn der beiden Zungenschlitze 220, 221 und vice versa.

Die Handläufe laufen jeweils in Halbschlitzen 250 - 253 aus, so dass die Zungenschlitze 220, 221 exakt in der Hälfte durchtrennt sind. Damit wird eine einfach und dennoch stabile Verlängerung des Handlaufs 200 ermöglicht (siehe unten).

Die Figur 2b zeigt eine Schnittdarstellung entlang der Linie A-A der Figur 2a. Dabei sind die beiden Zungenschlitze 220, 221 ersichtlich. Die Figur 2c zeigt eine Schnittdarstellung entlang der Linie B-B der Figur 2a, so dass die Nut 240 sichtbar ist.

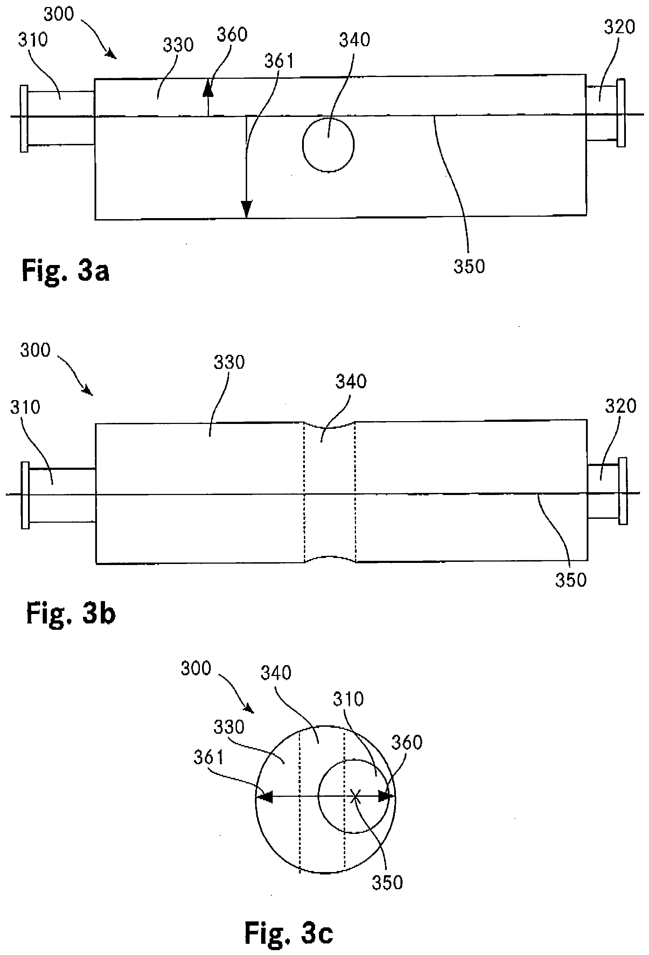

Die Figur 3a zeigt eine schematische Darstellung eines Fixierbolzens oder Montagebolzens 300 in Geländerlängsrichtung. Der Montagebolzen 300 weist einen Grundkörper 330 der Form eines Kreiszylinders auf, welche in der Mitte, rechtwinklig zur Zylinderachse eine Bohrung 340 zur Aufnahme eines Werkzeugs umfasst. Der Fixierbolzen 300 läuft in den Endbereich in Richtung der Zylinderachse, aber exzentrisch dazu beidseitig in einen Achsabschnitt 310, 320 aus. Die Achsabschnitte 310, 320 weisen einen geringeren Durchmesser auf, als der Grundkörper 330 und sind zueinander fluchtend angeordnet. Am distalen Ende weisen die beiden Achsabschnitte jeweils einen radialen Flansch auf, welche in montiertem Zustand zur axialen Fixierung des Montagebolzens 300 dienen. Der erste Achsabschnitt 310 ist länger ausgebildet als der zweite Achsabschnitt 320. Um den Montagebolzen 300 über die Achsabschnitte 310, 320 am Geländerpfosten zu lagern, kann damit zuerst mit dem ersten Achsabschnitt 310 in das Bolzenlager 122 schräg eingefahren, danach quer zur Geländerlängsrichtung eingeschwenkt, um schliesslich mit dem zweiten Achsabschnitt 320 in das Bolzenlager 123 einzufahren. Die Bohrung 340 ist derart orientiert, dass die Bohrungsachse einen maximalen Abstand zu der durch die beiden Achsabschnitte 310, 320 definierte Exzenterachse aufweist. In Figur 3a ist daher die Exzentrität der Achsabschnitte 310, 320 zum Grundkörper 330 maximal ersichtlich. Die Achse 350 bezeichnet die Rotationsachse des Montagebolzens 300 und mit dem ersten Pfeil 360 ist die erste radiale Richtung und mit dem zweiten Pfeil 361 ist die zweite radiale Richtung bezeichnet. Der Unterschied zwischen den Pfeillängen der Pfeile 360, 361 zeigt das Mass der Exzentrität des Montagebolzens. Dem Fachmann ist aber klar, dass die Figuren massstäblich variiert werden können.

Die Figur 3b zeigt eine Darstellung gemäss Figur 3a rechtwinklig zur Bohrung und quer zur Montagebolzenlängsrichtung. Demgemäss ist nun die Exzentrität der Achsabschnitte 310, 320 zum Grundkörper 330 in dieser Darstellung nicht ersichtlich. Die Bohrung 340 ist mit gestrichelter Linie dargestellt.

Die Figur 3c zeigt schliesslich eine Darstellung gemäss Figur 3b in Bolzenlängsrichtung, wobei die Bohrung wiederum mit gestrichelter Linie dargestellt ist. In dieser Darstellung ist die Beziehung zwischen der Exzenterachse der Achsabschnitte 310, 320 zur Achse der Bohrung 340 sowie zur Achse des Grundkörpers 330 gut ersichtlich.

Die Achsabschnitte 310, 320 weisen einen geringeren Durchmesser auf, als die Bolzenlager 122, 123 der Zungen 120, 121, so dass der Montagebolzen 300 einfach in die Bolzenlager 122, 123 eingefahren werden kann. Der Grundkörper 330 des Montagebolzens 300 weist eine geringere axiale Länge auf als der Abstand zwischen den Zungen 120, 121, wiederum aus dem Grund, dass der Montagebolzen 300 einfach in die Bolzenlager 122, 123 eingeführt werden kann.

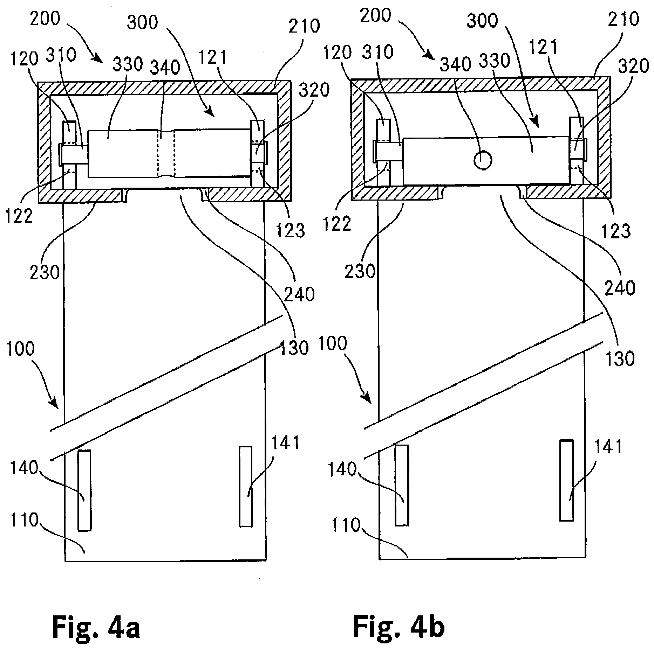

Die Figur 4a zeigt eine schematische Darstellung der Anordnung des Geländerpfostens 100, Handlaufs 200 und Montagebolzens 300 in Richtung des Geländerverlaufs vor der Rotation des Montagebolzens 300. Dabei ist der Handlauf als Schnittbild gemäss Figur 2c dargestellt.

Zur Montage des Geländersystems wird vorerst der Handlauf 200 mit den Zungenschlitzen 220, 221 über die Zungen 120, 121 des Geländerpfostens 100 geführt. Der Auflagebereich 230 des Handlaufs 200 kommt dabei zwischen den Vorsprüngen 130, 131 zu liegen. Damit ist der Handlauf bereits formschlüssig in der Ebene rechtwinklig zur Pfostenlängsachse fixiert. Nun wird ein Montagebolzen durch die Nut 240 des Handlaufs 200 geführt und wie oben beschrieben in die Bolzenlager 122, 123 der Zungen des Geländerpfostens 100 eingefahren. Die Bohrung 340 ist dabei vorerst noch in Richtung des Geländerpfostens 100 gerichtet, so dass der längste Radius des Montagebolzens in Geländerlängsrichtung ausgerichtet ist und damit den Handlauf 200 nicht auf dem Geländerpfosten 100 festklemmt.

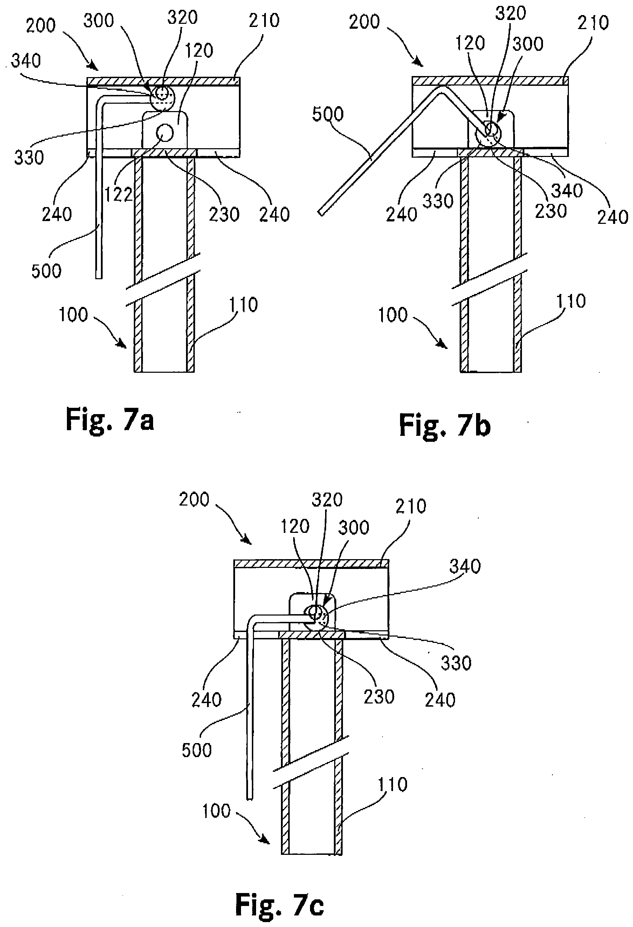

Die Figur 4b zeigt eine Darstellung gemäss Figur 4a nach der Rotation des Montagebolzens 300. Aufgrund der Exzentrizität des Montagebolzens 300 wird nun der Handlauf 200, insbesondere der Auflagebereich 230 zwischen dem Geländerpfosten 100 und dem Montagebolzen 300 festgeklemmt. Die Bohrung 340 des Montagebolzens ist nun in Geländerlängsrichtung gerichtet und der grösste Radius des Montagebolzens ist in Richtung des Auflagebereichs 230 des Handlaufs gerichtet, Die Drehung des Montagebolzens erfolgt vorzugsweise mittels eines Werkzeugs, insbesondere eines L-förmigen Stabs - ähnlich einem Inbusschlüssel (siehe Figuren 7a bis 7c).

In den Figuren 4a und 4b ist ersichtlich, dass ein Abstand zwischen Zungen 120, 121 und Innenwand des Handlaufs 200 besteht, welcher etwas grösser ist, als eine Wandstärke des Handlaufs 200. Dieser Raum ist zumal für den Flansch der Achsabschnitte 310, 320 des Montagebolzens 300 notwendig, weiter ist dieser Raum aber auch für den Adapter 400 zur Verlängerung des Handlaufs 200 vorgesehen (siehe unten).

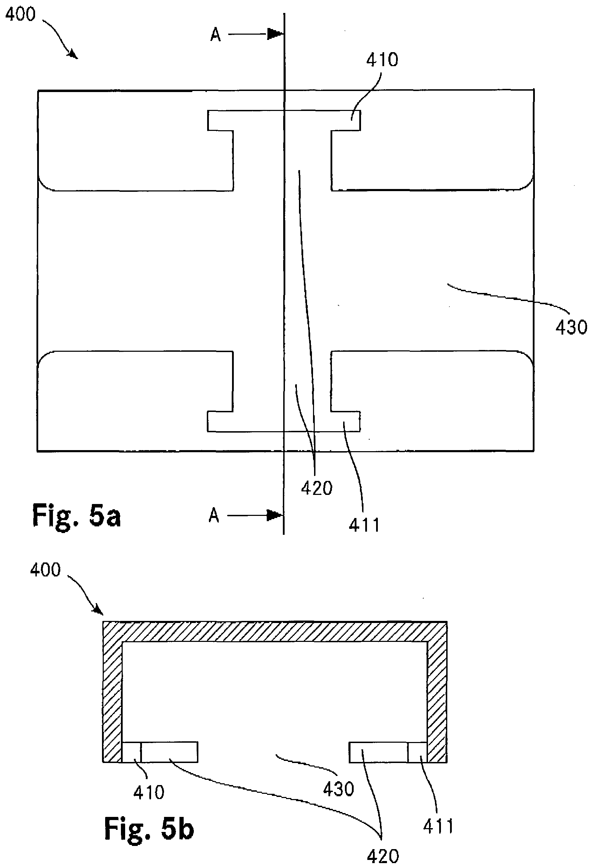

Die Figur 5a zeigt eine schematische Unteransicht eines Verlängerungsadapters 400 für den Handlauf 200. Dieser Adapter 400 dient zur Verlängerung des Handlaufs 200. Der Adapter 400 weist eine Grundform eines Vierkantrohrs auf, dessen Aussenabmessungen den Innenabmessungen des Handlaufs 200 entsprechen, so dass der Handlauf 200 passgenau auf diesen Adapter 400 aufgeschoben werden kann.

Der Adapter 400 weist, wie bereits der Handlauf 200, zwei Zungenschlitze 410, 411 auf. Diese sind derart im Randbereich des Adapters 400 angeordnet, dass die Zungen 120, 121 des Geländerpfostens 100 aufgenommen werden können. Damit verbleibt in montiertem Zustand kein (respektive kein wesentlicher) Abstand zwischen Innenwand des Adapters 400 und der Zungen 120, 121. Der dem Auflagebereich 230 des Handlaufs 200 entsprechende Bereich zwischen den Zungenschlitzen 410, 411 ist vorliegend als Aussparung respektive Bolzenaussparung 420 ausgebildet, so dass der Montagebolzen 300 durch den Adapter 400 in seiner Funktion nicht behindert ist. Weiter weist der Adapter 400 wie bereits der Handlauf 200 eine Nut 430 auf, welche mit der Nut 240 des Handlaufs übereinstimmt und in montiertem Zustand miteinander fluchten.

Die Figur 5b zeigt eine Schnittdarstellung entlang der Linie A-A der Figur 5a. Dabei erkennt man den Vierkantrohrquerschnitt und die Schlitze 410, 411, der gegenüber dem Handlauf fehlende Steg oder Auflagebereich 230 und die Nut 430.

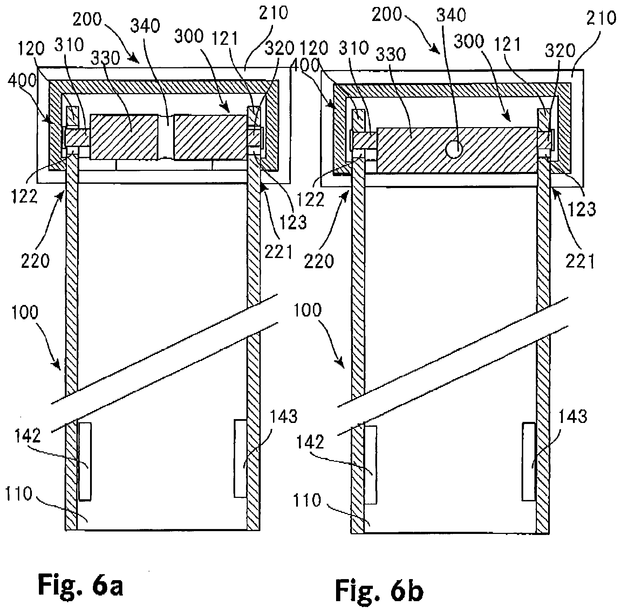

Die Figur 6a zeigt eine Schnittdarstellung der Anordnung entlang der Exzenterachse und entlang der Längsrichtung des Geländerpfostens 100. Die Anordnung umfasst den Geländerpfosten 100, den Handlauf 200, den Montagebolzen 300 und den Verlängerungsadapter 400. Die Blickrichtung ist in Richtung des Geländerverlaufs und der Zustand ist vorder Rotation des Montagebolzens 300.

Abgesehen davon, dass es sich bei den Figuren 6a und 6b um Schnittdarstellungen durch den Geländerpfosten 100 handelt und dass der Adapter 400 eingesetzt ist, stimmen die Figuren im Wesentlichen mit den Figuren 4a, 4b überein. Aufgrund der Wahl der Schnittebene ist nun ersichtlich, dass die beiden Handläufe 200 exakt in dieser Ebene aufeinanderstossen - daher ist die Querschnittsebene des Handlaufs 200 nicht schraffiert.

Zur Montage werden vorerst zwei Handlaufenden mit einem Adapter 400 verbunden. Dazu kann der Adapter 400 bereits vorgängig mit einem der Handläufe 200 verbunden sein. Anschliessend wird der Handlauf mit den Halbschlitzen 250, 261 über die Zungen 120, 121 geführt. Damit werden die beiden Handläufe 200 in Geländerlängsrichtung durch die Vorsprünge 130, 131 fixiert.

Anschliessend wird ein Montagebolzen 300 durch die Nut 240 des Handlaufs und durch die Nut 430 des Adapters geführt, um diesen gemäss obiger Beschreibung in die Bolzenlager 122, 123 einzufahren. Die Bolzenlager 122, 123 weisen gegenüber den Achsabschnitten 310, 320 ein Übermass auf, so dass die Positionierung des Montagebolzens 400 erleichtert wird. Schliesslich wird der Montagebolzen 400 rotiert, um wiederum den Auflagebereich 230 des Handlaufs zwischen dem Montagebolzen 400 und dem Geländerpfosten festzuklemmen. Die Figur 6b zeigt eine Darstellung gemäss Figur 6a nach der Rotation des Montagebolzens 400.

Die Figur 7a zeigt eine schematische Schnittdarstellung entlang des Geländerverlaufs und entlang des Geländerpfostens der Anordnung gemäss Figur 4a vor dem Einsetzen des Montagebolzens mittels eines Werkzeugs 500.

Ein L-förmigen Werkzeugs 500, zum Beispiel ein L-förmiger Stahlstab, wird mit dem kurzen Abschnitt in die Bohrung 340 des Montagebolzens 400 geführt. Anschliessend wird der Montagebolzen 400 durch die Nut 240 des Handlaufs geführt und in die Bolzenlager 122, 123 eingesetzt.

In einer Variante können die Zungen 120, 121 federnd ausgebildet sein, so dass der Montagebolzen 400 mit Druck in die Bolzenlager 122, 123 eingerastet werden kann. Der notwendige Druck kann dadurch erreicht werden, dass das Werkzeug gemäss Figur 7b mit der Ecke innen an die Handlaufoberseite anschlägt und so einen Hebelarm bildet. Sobald der Montagebolzen 400 gemäss Figur 7b eingerastet ist, muss nur noch der lange Arm des Werkzeugs 500 gegen den Geländerpfosten 100 gepresst werden, um mit der Rotation des Montagebolzens 300 die Montage gemäss Figur 7c abzuschliessen.

In der bevorzugten Ausführungsform kann der Montagebolzen 300, wie oben beschrieben, ohne Kraftaufwand in die Bolzenlager 122, 123 eingeführt werden, so dass auf die Hebelwirkung verzichtet werden kann. Daher kann die Länge des kürzeren Abschnitts des Werkzeugs 500 im Unterschied zu den Figuren 7a bis 7c auch kürzer ausgebildet sein.

Die Figur 7b zeigt eine Darstellung gemäss Figur 7a nach dem Einsetzen des Montagebolzens 300 und bei angesetztem Hebel des Werkzeugs 500. Das Werkzeug 500 wurde zum Erreichen dieser Position nach oben, in Richtung des Handlaufs 200 gepresst, so dass über die Hebelwirkung der Montagebolzen 300 einrastet. Anschliessend wird der lange Abschnitt des Werkzeugs 500 wieder nach unten respektive in die entgegengesetzte Richtung geführt, so dass der Montagebolzen 300 rotiert wird. Die Figur 7c zeigt eine Darstellung gemäss Figur 7b nach der Rotation des Montagebolzens 300. Aufgrund der Exzentrität des Montagebolzens 300 wird nun der Handlauf 200 zwischen dem Montagebolzen 300 und dem Geländerpfosten 100 festgeklemmt.

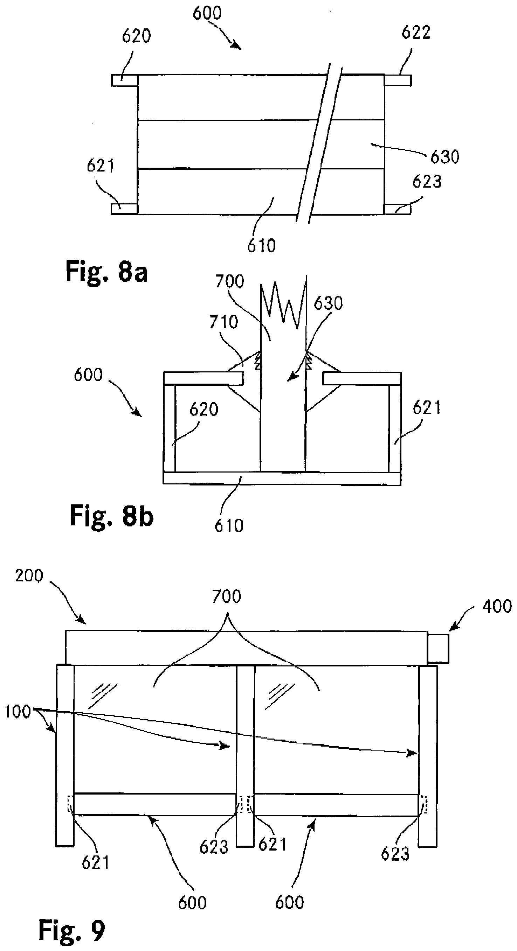

Die Figur 8a zeigt eine schematische Darstellung einer Draufsicht auf eine Querstrebe 600. Die Querstrebe 600 wird parallel zum Handlauf 200, in einem unteren Bereich des Geländers montiert. Die vorliegende Querstrebe 600 dient einerseits zur Begrenzung eines Geländerfeldes oder einer Füllplatte und anderseits auch zur Aufnahme eines solchen. Die Querstrebe 600 weist eine Grundform eines Vierkantrohrs respektive einer Nutschiene 610 auf, welche auf einer Seite eine durchgehende Nut 630 oder einen Längsschlitz 630 aufweist. Die Nut 630 dient zur Aufnahme der Füllplatte. Die die Nut 630 aufweisende Seite der Querstrebe 600 weist vorliegend eine Breite auf, welche um zwei Wandstärken geringer ist, als eine quer zur Geländerlängsrichtung gemessene Breite eines Geländerpfostens. Zwei gegenüberliegende Seiten, welche an die Seite mit der Nut 630 angrenzen, laufen beidseitig in Geländerlängsrichtung in Zungen 620 - 623 aus. Diese Zungen 620 - 623 sind derart dimensioniert, dass sie in die Querstrebenschlitze 140 - 143 eingeführt werden können, so dass die Querstrebe 600 zwischen zwei Geländerpfosten 100 gehalten werden kann.

Die Figur 8b zeigt eine Darstellung gemäss Figur 8a in Richtung einer Längsrichtung der Querstrebe 600. Diese Figur zeigt nun zusätzlich eine Dichtung 710 bestehend aus zwei Leisten, welche auf die Längskanten der Nut 630 aufgesetzt sind. Eine Glasscheibe 700 ist in der Nut 630 aufgenommen und über die Dichtung 710 gehalten. Eine ebensolche Dichtung 710 wird in der Nut 240 des Handlaufs 200 montiert.

Die Figur 9 zeigt eine schematische Darstellung eines kompletten Geländerabschnittes umfassend zwei Glasscheiben 700. Die Verbindung zwischen Handlauf 200 und Geländerpfosten 100 erfolgt gemäss obiger Beschreibung. Vorgängig werden bei der Positionierung der Geländerpfosten 100 zugleich die Querstreben 600 mit den Zungen 620 - 623 in die Querstrebenschlitze 140 - 143 geführt. Anschliessend erfolgt die obig beschriebene Montage des Handlaufs 200. Schliesslich werden die Gummidichtungen 710 in der Nut 240 des Handlaufs 200 und in der Nut 630 der Querstrebe 600 eingesetzt. Zum Schluss wird eine Glasplatte 700 zuerst nach oben in die Nut 240 des Handlaufs 200 so weit nach oben eingeführt, dass die Glasplatte 700 unten über der Querstrebe 600 eingeschwenkt und in die Nut 630 nach unten geführt werden kann. Die Glasplatte 700 weist entsprechend eine Breite auf, die dem Geländerpfostenabstand entspricht. Die Höhe der Glasplatte 700 quer zur Geländerlängsrichtung ist geringfügig kleiner als der Abstand zwischen Oberkante des Handlaufs 200 und Oberkannte der Querstrebe 600. Damit die Glasplatte 700 sicher in den Nuten 240, 630 gehalten ist, ist sicherzustellen, dass die Glasplatte zudem eine grössere Höhe aufweist, als der Abstand zwischen Querstrebe 600 und Handlauf 200 (das heisst der Abstand der Innenkanten) plus die Nuttiefe der Querstrebe 600. Die Nuttiefe des Handlaufs 200 ist zudem tiefer zu wählen, als die Nuttiefe der Querstrebe 600.

Nach der Rotation des Montagebolzens 300 sind Handlauf 200 und Geländerpfosten im Prinzip fixiert. Aufgrund der Haftreibung bleibt der Montagebolzen 300 In dieser Orientierung. Dennoch kann es von Vorteil sein, wenn der Montagebolzen 300 anderweitig noch gesichert wird, zum Beispiel mittels Verkeilung oder durch Verkleben, Dem Fachmann sind weitere Möglichkeiten bekannt, um den Montagebolzen 300 zu fixieren.

Der Handlauf 200, die Geländerpfosten 100, die Montagebolzen 300, der Adapter 400 sowie die Querstrebe 600 sind vorliegend aus Chromstahl ausgebildet. Ebenso könnten die Teile aber auch aus anderen Stahlsorten, aus Aluminium, Verbundwerkstoffen, Kunststoffen etc. ausgebildet sein. Die Materialwahl wird typischerweise dem Einsatz des Geländers angepasst.

Zusammenfassend ist festzustellen, dass erfindungsgemäss ein Montagesystem geschaffen wird, welches insbesondere bei der Verwendung im Geländerbau zu besonders kostengünstigen und einfach aufgebauten Geländern führt. Die Geländer können, abgesehen von den Feldern, im Wesentlichen aus Lasergeschnittenen Vierkantrohren und bearbeiteten Rundstäben hergestellt werden. Bei der Verwendung von Chromstahl können damit besonders günstige, aber dennoch hochwertige und äusserst ästhetische Geländer geschaffen werden.

## Patentansprüche

1. Montagesystem (100, 200, 300), insbesondere ein Geländermontagesystem, umfassend:
a. ein erstes Element (100) und ein zweites Element (200), insbesondere ein Geländerpfosten (100) und ein Geländerhandlauf (200) respektive ein Geländerpfosten (100) und eine Geländerquerstrebe (200); sowie
b. einen Befestigungskörper (300) mit einer Längsachse (350), wobei der Befestigungskörper (300) in einer ersten radialen Richtung rechtwinklig zur Längsachse (350) einen ersten Radius (360) hat und in einer zweiten radialen Richtung rechtwinklig zur Längsachse (350) einen zweiten, zum ersten Radius (360) unterschiedlichen Radius (361) hat; und wobei
c. das erste Element (100) ein Auflager für das zweite Element (200) umfasst;
**dadurch gekennzeichnet, dass**
d. der Befestigungskörper (300) am ersten Element um die Längsachse (350) derart rotierbar gelagert ist, dass zwischen dem Befestigungskörper (300) und dem Auflager eine Lücke ist, welche je nach Orientierung des Befestigungskörpers (300) bezüglich einer Rotation um die Längsachse desselben unterschiedlich ist; und wobei
e. das Auflager derart angeordnet und ausgebildet ist, dass das zweite Element (200) zwischen dem Befestigungskörper (300) und dem Auflager des ersten Elements (100) kraftschlüssig gehalten ist, wenn der Befestigungskörper (300) mit der zweiten radialen Richtung (361) in Richtung des Auflagers ausgerichtet ist.

2. Montagesystem (100, 200, 300) nach Anspruch 1, **dadurch gekennzeichnet, dass** der Befestigungskörper (300) einen zylindrischen, insbesondere einen kreiszylindrischen Grundkörper (330) umfasst.

3. Montagesystem (100, 200, 300) nach Anspruch 1 oder 2, **dadurch gekennzeichnet, dass** der Befestigungskörper (300) beidseitig in Richtung der Längsachse (350) in einen Lagerbolzen (310, 320) ausläuft, über welchen der Befestigungskörper (300) um die Längsachse (350) rotierbar am ersten Element (100) gelagert ist.

4. Montagesystem (100, 200, 300) nach Anspruch 3, **dadurch gekennzeichnet, dass** die Lagerbolzen (310, 320) exzentrisch am Grundkörper (330) angeordnet sind.

5. Montagesystem (100, 200, 300) nach einem der Ansprüche 1 bis 4, **dadurch gekennzeichnet, dass** der Befestigungskörper (300) Kopplungsmittel (340) für ein Werkzeug (500) umfasst, um den Befestigungskörper (300) um die Längsachse (350) zu rotieren.

6. Montagesystem (100, 200, 300) nach Anspruch 5, **dadurch gekennzeichnet, dass** die Kopplungsmittel (340) als mindestens eine rechtwinklig zu einer Grundkörperlängsachse orientierte Bohrung (340) ausgebildet sind.

7. Montagesystem (100, 200, 300) nach einem der Ansprüche 1 bis 6, **dadurch gekennzeichnet, dass** das erste Element (100) zwei parallele Zungen (120, 121) aufweist, in welchen jeweils ein Bolzenlager (122, 123) als Bohrungen ausgebildet sind, in welche die Lagerbolzen (310, 320) des Befestigungskörpers (300) gelagert sind.

8. Montagesystem (100, 200, 300) nach Anspruch 7, **dadurch gekennzeichnet, dass** die Zungen (120, 121) als Ausläufer zweier ersten parallelen Seiten eines ersten Rohrs, vorzugsweise eines ersten Vierkantrohrs (110) ausgebildet sind.

9. Montagesystem (100, 200, 300) nach Anspruch 7 oder 8, **dadurch gekennzeichnet, dass** ein Zwischenbereich zwischen den Zungen (120, 121) als Auflager für das zweite Element (200) ausgebildet ist.

10. Montagesystem (100, 200, 300) nach einem der Ansprüche 7 bis 9, **dadurch gekennzeichnet, dass** das zweite Element (200) als Rohr, insbesondere als Vierkantrohr (210) ausgebildet ist, wobei eine erste Seite des Rohrs Schlitze (220, 221) zur Aufnahme der Zungen (120, 121) des ersten Elements (100) aufweist.

11. Montagesystem (100, 200, 300) nach Anspruch 10, **dadurch gekennzeichnet, dass** die Schlitze (220, 221) in eine Rohrlängsrichtung ausgerichtet und im Randbereich der ersten Seiten angeordnet sind.

12. Montagesystem (100, 200, 300) nach einem der Ansprüche 1 bis 11, **dadurch gekennzeichnet, dass** das zweite Element (200), insbesondere über einen Vorsprung (130, 131) am ersten Element (100) und eine entsprechende Öffnung (240) am zweiten Element (200), in einer Ebene formschlüssig gehalten ist.

13. Montagesystem (100, 200, 300) nach einem der Ansprüche 9 und 12, **dadurch gekennzeichnet, dass** der Vorsprung (130, 131) im Zwischenbereich angeordnet ist.

14. Montagesystem (100, 200, 300) nach einem der Ansprüche 1 bis 13, **dadurch gekennzeichnet, dass** das Montagesystem (100, 200, 300) einen Handlauf (200) und eine parallel zum Handlauf (200) angeordnete Querstrebe (600) umfasst, welche in montiertem Zustand zueinander gerichtete Längsschlitze (630, 240) zur Aufnahme einer Füllplatte (700), insbesondere einer Glasplatte (700), aufweisen.

15. Montagesystem (100, 200, 300) nach Anspruch 14 **dadurch gekennzeichnet, dass** die Füllplatte (700) über ein Dichtungselement (710) in den Längsschlitzen (630, 240) des Handlaufs (200) und der Querstrebe (600), vorzugsweise kraftschlüssig gehalten sind.

16. Montagesystem (100, 200, 300) nach einem der Ansprüche 1 bis 13, **dadurch gekennzeichnet, dass** das erste Element (100), das zweite Element (200) und der Befestigungskörper (300) aus Stahl, insbesondere aus Chromstahl ausgebildet sind.

17. Verfahren zur Montage eines ersten Elements (100) an einem zweiten Element (200), insbesondere zur Montage eines Handlaufs (200) oder einer Querstrebe (600) an einem Geländerpfosten (100), unter Verwendung eines Befestigungskörpers (300) mit einer Längsachse (350), wobei der Befestigungskörper (300) in einer ersten radialen Richtung rechtwinklig zur Längsachse einen ersten Radius (360) hat und in einer zweiten radialen Richtung rechtwinklig zur Längsachse einen zweiten, zum ersten Radius (360) unterschiedlichen Radius (361) hat, und wobei das erste Element (100) ein Auflager für das zweite Element (200) umfasst, und wobei zwischen dem Befestigungskörper und einem Auflager eine Lücke ist, welche je nach Orientierung des Befestigungskörpers bezüglich einer Rotation um die Längsachse desselben unterschiedlich ist, mit den folgenden Schritten:
a. Positionieren des zweiten Elements (200) am ersten Element (100);
**gekennzeichnet durch**
b. rotierbar Lagern des Befestigungskörpers (300) am ersten Element (100);
c. Festklemmen des zweiten Elements (200) zwischen dem Befestigungskörper (300) und dem ersten Element (100) durch Rotieren des Befestigungskörpers (300).

## Claims

1. Mounting system (100, 200, 300), in particular a balustrade mounting system, comprising:
a. a first element (100) and a second element (200), in particular a balustrade post (100) and a balustrade handrail (200) or a balustrade post (100) and a balustrade cross-strut (200); and
b. a fastening body (300) having a longitudinal axis (350), wherein the fastening body (300) has a first radius (360) in a first radial direction at a right angle to the longitudinal axis (350) and has a second radius (361), which is different from the first radius (360), in a second radial direction at a right angle to the longitudinal axis (350); and wherein
c. the first element (100) comprises a support for the second element (200);
**characterized in that**
d. the fastening body (300) is mounted on the first element so as to be rotatable about the longitudinal axis (350) in such a way that there is a gap between the fastening body (300) and the support, which gap differs depending on the orientation of the fastening body (300) in terms of a rotation about the longitudinal axis thereof; and wherein
e. the support is arranged and designed in such a way that the second element (200) is held in a force-fitting manner between the fastening body (300) and the support of the first element (100) if the fastening body (300) is oriented with the second radial direction (361) in the direction of the support.

2. Mounting system (100, 200, 300) according to Claim 1, **characterized in that** the fastening body (300) comprises a cylindrical, in particular a circular cylindrical, basic body (330).

3. Mounting system (100, 200, 300) according to Claim 1 or 2, **characterized in that** the fastening body (300) extends on both sides in the direction of the longitudinal axis (350) into a bearing bolt (310, 320) via which the fastening body (300) is mounted on the first element (100) so as to be rotatable about the longitudinal axis (350).

4. Mounting system (100, 200, 300) according to Claim 3, **characterized in that** the bearing bolts (310, 320) are arranged excentrically on the basic body (330) .

5. Mounting system (100, 200, 300) according to one of Claims 1 to 4, **characterized in that** the fastening body (300) comprises coupling means (340) for a tool (500) in order to rotate the fastening body (300) about the longitudinal axis (350).

6. Mounting system (100, 200, 300) according to Claim 5, **characterized in that** the coupling means (340) take the form of at least one hole (340) which is oriented at a right angle to a basic body longitudinal axis.

7. Mounting system (100, 200, 300) according to one of Claims 1 to 6, **characterized in that** the first element (100) has two parallel tongues (120, 121) in each of which bolt bearings (122, 123) are formed as holes in which the bearing bolts (310, 320) of the fastening body (300) are mounted.

8. Mounting system (100, 200, 300) according to Claim 7, **characterized in that** the tongues (120, 121) are formed as extensions of two first parallel sides of a first tube, preferably of a first rectangular tube (110) .

9. Mounting system (100, 200, 300) according to Claim 7 or 8, **characterized in that** an intermediate region is formed between the tongues (120, 121) as a support for the second element (200).

10. Mounting system (100, 200, 300) according to one of Claims 7 to 9, **characterized in that** the second element (200) is formed as a tube, in particular as a rectangular tube (210), wherein a first side of the tube has slots (220, 221) for receiving the tongues (120, 121) of the first element (100).

11. Mounting system (100, 200, 300) according to Claim 10, **characterized in that** the slots (220, 221) are oriented in a tube longitudinal direction and are arranged in the edge region of the first sides.

12. Mounting system (100, 200, 300) according to one of Claims 1 to 11, **characterized in that** the second element (200) is held in a form-fitting manner in one plane, in particular by a projection (130, 131) on the first element (100) and a corresponding opening (240) in the second element (200).

13. Mounting system (100, 200, 300) according to one of Claims 9 and 12, **characterized in that** the projection (130, 131) is arranged in the intermediate region.

14. Mounting system (100, 200, 300) according to one of Claims 1 to 13, **characterized in that** the mounting system (100, 200, 300) comprises a handrail (200) and a cross-strut (600) which is arranged parallel to the handrail (200), which, in the mounted state, have longitudinal slots (630, 240) which are directed towards one another and are intended to receive a filling panel (700), in particular a glass panel (700).

15. Mounting system (100, 200, 300) according to Claim 14, **characterized in that** the filling panel (700) are held, preferably in a force-fitting manner, via a sealing element (710) in the longitudinal slots (630, 240) of the handrail (200) and of the cross-strut (600).

16. Mounting system (100, 200, 300) according to one of Claims 1 to 13, **characterized in that** the first element (100), the second element (200) and the fastening body (300) are formed from steel, in particular from chromium steel.

17. Method for mounting a first element (100) on a second element (200), in particular for mounting a handrail (200) or a cross-strut (600) on a balustrade post (100), using a fastening body (300) having a longitudinal axis (350), wherein the fastening body (300) has a first radius (360) in a first radial direction at a right angle to the longitudinal axis and has a second radius (361), which is different from the first radius (360), in a second radial direction at a right angle to the longitudinal axis, and wherein the first element (100) comprises a support for the second element (200), and wherein there is a gap between the fastening body and a support, which gap differs depending on the orientation of the fastening body in terms of a rotation about the longitudinal axis thereof, comprising the following steps:
a. positioning the second element (200) on the first element (100);
**characterized by**
b. rotatably mounting the fastening body (300) on the first element (100);
c. clamping the second element (200) between the fastening body (300) and the first element (100) by rotating the fastening body (300).

## Revendications

1. Système de montage (100, 200, 300), en particulier système de montage de balustrade, comprenant :
a. un premier élément (100) et un deuxième élément (200), en particulier un montant de balustrade (100) et une main courante de balustrade (200), respectivement un montant de balustrade (100) et une traverse de balustrade (200) ; et
b. un corps de fixation (300) avec un axe longitudinal (350), le corps de fixation (300) présentant un premier rayon (360) dans une première direction radiale perpendiculairement à l'axe longitudinal (350) et un deuxième rayon (361) différent du premier rayon (360) dans une deuxième direction radiale perpendiculairement à l'axe longitudinal (350); et
c. le premier élément (100) comprenant un appui pour le deuxième élément (200) ;
**caractérisé en ce que**
d. le corps de fixation (300) est supporté de manière rotative autour de l'axe longitudinal (350) sur le premier élément de telle sorte qu'entre le corps de fixation (300) et l'appui soit réalisé un espace vide qui est différent en fonction de l'orientation du corps de fixation (300) par rapport à une rotation autour de l'axe longitudinal de ce dernier ; et
e. l'appui étant disposé et réalisé de telle sorte que le deuxième élément (200) soit retenu par engagement par force entre le corps de fixation (300) et l'appui du premier élément (100) lorsque le corps de fixation (300) avec la deuxième direction radiale (361) est orienté dans la direction de l'appui.

2. Système de montage (100, 200, 300) selon la revendication 1, **caractérisé en ce que** le corps de fixation (300) comprend un corps de base cylindrique (330), en particulier cylindrique circulaire.

3. Système de montage (100, 200, 300) selon la revendication 1 ou 2, **caractérisé en ce que** le corps de fixation (300) se termine des deux côtés dans la direction de l'axe longitudinal (350) par un boulon de palier (310, 320) par le biais duquel le corps de fixation (300) est supporté de manière rotative autour de l'axe longitudinal (350) sur le premier élément (100).

4. Système de montage (100, 200, 300) selon la revendication 3, **caractérisé en ce que** les boulons de palier (310, 320) sont disposés de manière excentrique sur le corps de base (330).

5. Système de montage (100, 200, 300) selon l'une quelconque des revendications 1 à 4, **caractérisé en ce que** le corps de fixation (300) présente des moyens d'accouplement (340) pour un outil (500) afin de faire tourner le corps de fixation (300) autour de l'axe longitudinal (350).

6. Système de montage (100, 200, 300) selon la revendication 5, **caractérisé en ce que** les moyens d'accouplement (340) sont réalisés sous forme d'au moins un alésage (340) orienté perpendiculairement à un axe longitudinal du corps de base.

7. Système de montage (100, 200, 300) selon l'une quelconque des revendications 1 à 6, **caractérisé en ce que** le premier élément (100) présente deux langues parallèles (120, 121) dans lesquelles est réalisé à chaque fois un palier à boulon respectif (122, 123) en tant qu'alésage, dans lesquels alésages sont supportés les boulons de paliers (310, 320) du corps de fixation (300).

8. Système de montage (100, 200, 300) selon la revendication 7, **caractérisé en ce que** les langues (120, 121) sont réalisées sous forme de ramifications de deux premiers côtés parallèles d'un premier tube, de préférence d'un premier tube carré (110).

9. Système de montage (100, 200, 300) selon la revendication 7 ou 8, **caractérisé en ce qu'**une région intermédiaire entre les langues (120, 121) est réalisée sous forme d'appui pour le deuxième élément (200).

10. Système de montage (100, 200, 300) selon l'une quelconque des revendications 7 à 9, **caractérisé en ce que** le deuxième élément (200) est réalisé sous forme de tube, en particulier sous forme de tube carré (210), un premier côté du tube présentant des fentes (220, 221) pour recevoir les langues (120, 121) du premier élément (100).

11. Système de montage (100, 200, 300) selon la revendication 10, **caractérisé en ce que** les fentes (220, 221) sont orientées dans une direction longitudinale du tube et sont disposées dans la région de bord du premier côté.

12. Système de montage (100, 200, 300) selon l'une quelconque des revendications 1 à 11, **caractérisé en ce que** le deuxième élément (200) est supporté par engagement par correspondance de formes dans un plan, en particulier par le biais d'une saillie (130, 131) au niveau du premier élément (100) et d'une ouverture correspondante (240) au niveau du deuxième élément (200).

13. Système de montage (100, 200, 300) selon l'une quelconque des revendications 9 et 12, **caractérisé en ce que** la saillie (130, 131) est disposée dans la région intermédiaire.

14. Système de montage (100, 200, 300) selon l'une quelconque des revendications 1 à 13, **caractérisé en ce que** le système de montage (100, 200, 300) comprend une main courante (200) et une traverse (600) disposée parallèlement à la main courante (200), lesquelles, dans l'état monté, présentent des fentes longitudinales orientées l'une vers l'autre (630, 240) pour recevoir une plaque de remplissage (700), en particulier une plaque en verre (700).

15. Système de montage (100, 200, 300) selon la revendication 14, **caractérisé en ce que** la plaque de remplissage (700) sont retenue de préférence par engagement par force par le biais d'un élément d'étanchéité (710) dans les fentes longitudinales (630, 240) de la main courante (200) et de la traverse (600).

16. Système de montage (100, 200, 300) selon l'une quelconque des revendications 1 à 13, **caractérisé en ce que** le premier élément (100), le deuxième élément (200) et le corps de fixation (300) sont réalisés en acier, en particulier en acier chromé.

17. Procédé de montage d'un premier élément (100) sur un deuxième élément (200), en particulier pour le montage d'une main courante (200) ou d'une traverse (600) sur un montant de balustrade (100), en utilisant un corps de fixation (300) avec un axe longitudinal (350), le corps de fixation (300) présentant un premier rayon (360) dans une première direction radiale perpendiculairement à l'axe longitudinal et un deuxième rayon (361) différent du premier rayon (360) dans une deuxième direction radiale perpendiculaire à l'axe longitudinal, et le premier élément (100) comprenant un appui pour le deuxième élément (200), et entre le corps de fixation et l'appui étant réalisé un espace vide qui est différent en fonction de l'orientation du corps de fixation par rapport à une rotation autour de l'axe longitudinal de ce dernier, comprenant les étapes suivantes :
a. positionnement du deuxième élément (200) sur le premier élément (100) ;
**caractérisé par**
b. le support de manière rotative du corps de fixation (300) sur le premier élément (100) ;
c. la fixation du deuxième élément (200) entre le corps de fixation (300) et le premier élément (100) par rotation du corps de fixation (300).
